# EUROPEAN PATENT SPECIFICATION

(11) **EP 4 334 161 B1**
(45) Date of publication and mention of the grant of the patent: **21.10.2026**
(21) Application number: 22744071.6
(22) Date of filing: 23.06.2022
(51) Int. Cl.: B60L 50/50, B60L 1/00

(54) **ELECTRIC VEHICLE EMULATION SYSTEM AND METHOD**
EMULATIONSSYSTEM UND -VERFAHREN FÜR ELEKTROFAHRZEUG
SYSTÈME ET PROCÉDÉ D'ÉMULATION DE VÉHICULE ÉLECTRIQUE

(30) Priority: 24.06.2021 US 202163214654 P
(43) Date of publication of application: 13.03.2024
(73) Proprietor: LORD Corporation, Cleveland OH 44124 (US)
(72) Inventor: NORRIS, Mark, Apex, NC 27539 (US); BARBULESCU, Florin, Fuquay Varina, NC 27526 (US); KINTZ, Karl, Apex, NC 27539 (US); BIEBER, Martin, Apex, NC 27502 (US)
(74) Representative: Murgitroyd & Company
(86) International application number: PCT/US2022/034772
(87) International publication number: WO 2022/271977

(56) References cited:
- EP-A1- 3 733 442
- WO-A1-2011/132347
- WO-A1-2020/095280
- JP-A- 2019 151 189
- KR-A- 20140 014 717
- KR-B1- 101 689 236
- US-A1- 2015 199 955
- US-A1- 2023 144 723

## Description

### Field of Invention/Background

The subject matter disclosed herein generally relates to vibration control and methods for emulating the feel of an internal combustion engine, also referred to as ICE, while operating an all-electric, hybrid-electric, or alternative fuel vehicle.

### Background

With increased interest in all-electric, hybrid-electric, or alternative fuel vehicles, some brands of vehicles may lose some of the cache attributable to an internal combustion engine. Much of the cache comes from the vibrations felt by the passengers within the passenger cabin. In some internal combustion engine vehicles, the passengers want to feel the one or more vibrations tied to the engine and its revolutions per minute (RPM), the gears shifting, and/or the feeling of vibrations generated from the exhaust system. These feelings may be part of a brand identity or a desired option for a particular type or style of a vehicle. Yet, the owners of the vehicle are also interested in being environmentally conscientious and have chosen all-electric, hybrid-electric, or alternative fuel vehicles. Thus, the desire to have a vehicle that feels traditional yet is more consistent with the desire to be environmentally aware.

What is needed is a vibration inducing system to create a feel that emulates an internal combustion engine. The following documents may provide technical background to the present disclosure: WO2020/095280 A1; JP2019151189 A; EP3733442 A1; US2015/199955 A1; KR20140014717 A; KR101689236 B1; and WO2011/132347 A1.

### Summary of the Invention

The invention is defined by the appended independent claims, with optional features defined in the dependent claims.

In one embodiment the present disclosure describes a system for emulating the feel of an internal combustion engine during the operation of an electric vehicle, as defined by appended claim 1.

In another embodiment the present disclosure provides a method of emulating the feel of an internal combustion engine during the operation of an electric vehicle, as defined by appended claim 9.

### Brief Description of the Drawings

FIG. 1 illustrates a schematic of an electric vehicle.
FIG. 2 illustrates force generators generating a force at 35Hz with the force modulated for emulating an internal combustion engine at idle.
FIGS. 3A and 3B illustrate the emulation of a V8 internal combustion engine vehicle on a passenger side of the vehicle frame when the vehicle is moving and the gears are shifting.
FIGS. 4A and 4B illustrate the emulation of a V8 internal combustion engine vehicle on a driver side of the vehicle frame when the vehicle is moving and the gears are shifting.
FIG. 5 illustrates the emulation of a V8 internal combustion engine vehicle gear shift transient vibration.
FIG. 6 depicts an electrical schematic for an example of a linear force generator.
FIG. 7 is a partial cut-away view of an example of a linear force generator.
FIG. 8 depict an electrical schematic for an example of a circular force generator.

### Detailed Description

Throughout this disclosure, the terms "about", "approximate", and variations thereof, are used to indicate that a value includes the inherent variation or error for the device, system, or measuring method being employed as recognized by those skilled in the art.

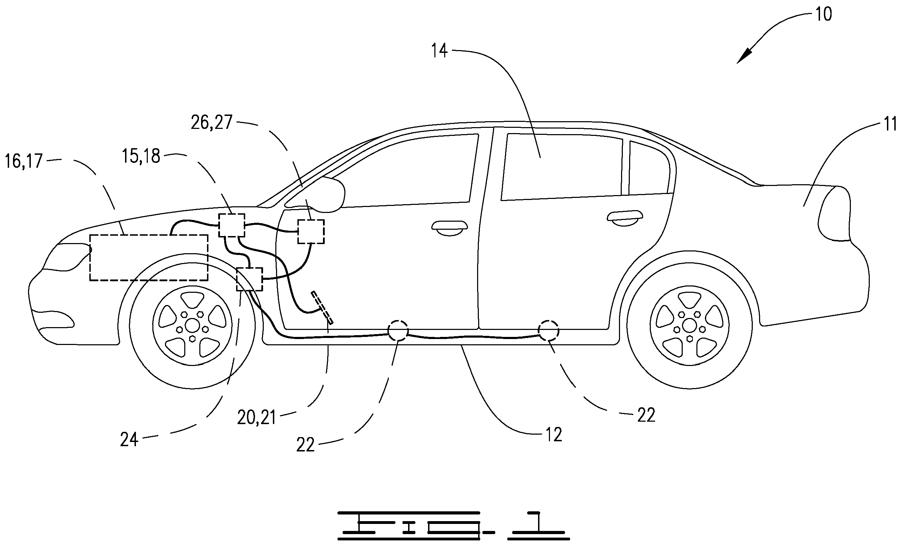

Referring to FIGS. 1-5, a system to emulate an internal combustion engine vehicle's feel is disclosed. FIG. 1 illustrates an electric vehicle 10 with a chassis 12, a passenger cabin 14, an electric motor 16, a CAN BUS network 18, an accelerator 20, at least one force generator (FG) 22, and at least one FG controller 24. Any suitable control mechanism may serve as accelerator 20; however, FIG. 1 depicts a common foot pedal. Additional sensors such as a vehicle speed sensor 15 and an accelerator position sensor 21 are also present as part of the original equipment of electric vehicle 10. Such sensors may be located at any convenient location suitable carrying out their purpose. Further, electric motor 16 will commonly include an electric motor controller 17. These components and sensors provide data to CAN BUS network 18 as does electric motor controller 17 and FG controller 24. As used herein, the terms electric vehicle 10 and electric motor 16 are not meant to be limiting to an all-electric vehicle. Instead, electric vehicle 10 and electric motor 16 are meant to be inclusive of all-electric vehicles operating with an electric motor, hybrid-electric vehicles operating with a hybrid electric motor-internal combustion engine, and alternative fuel vehicles operating with fuel cells and other alternative fuels.

As known to those skilled in the art, the chassis, or frame, forms the basis for the rest of the vehicle. Everything else is built on the chassis. The chassis may also include other components, such as suspension, brakes, drivetrain and steering linkage. Modern vehicles typically have one of two different styles of chassis: Unibody or body-on-frame. With the exceptions of pickup trucks or large SUVs, most vehicles have a unibody chassis. This means that the body-the thing that gives the car its exterior shape-and the chassis are all part of the same assembly. As used herein, the term chassis refers to both a body-on-frame configuration and a unibody configuration.

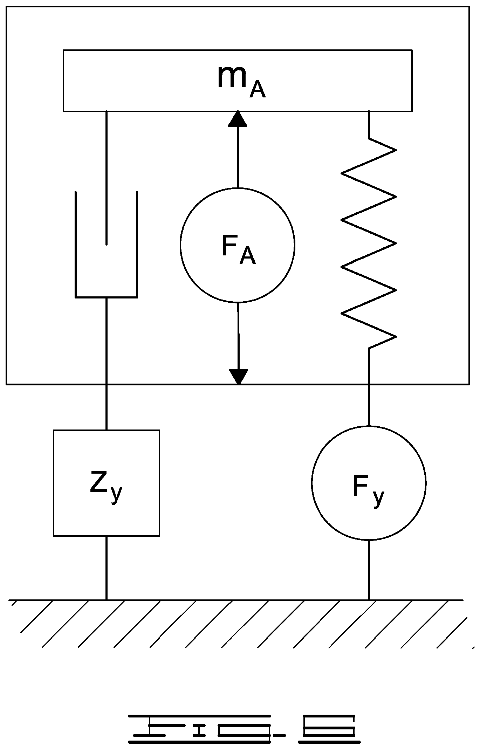

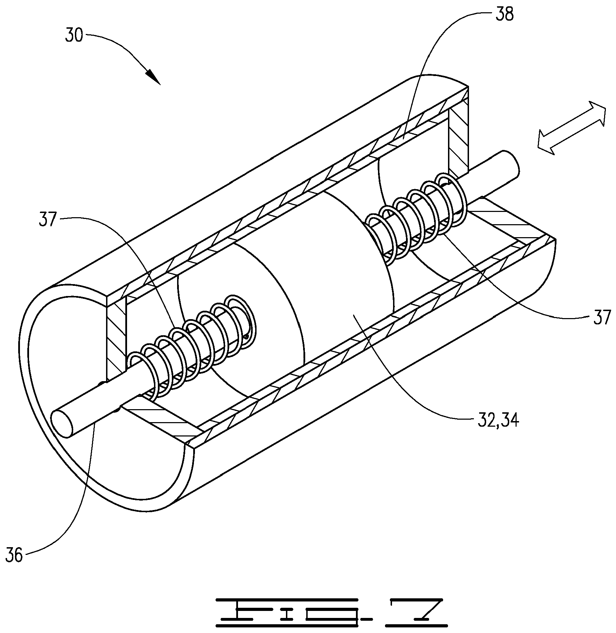

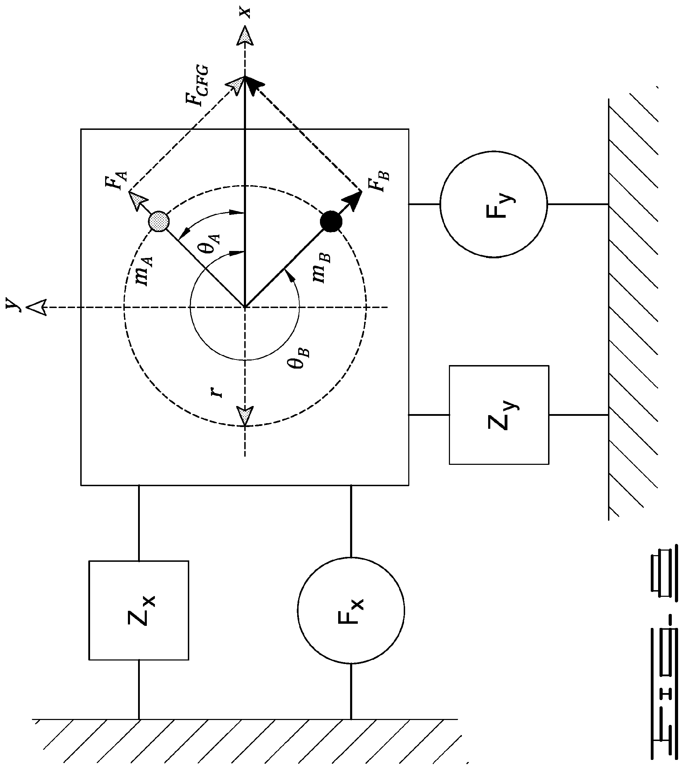

The construction and use of FGs 22 are well known to those skilled in the art. Therefore, the make-up and operation of linear and circular force generators will not be discussed in detail. As known to those skilled in the art, FGs 22 are commonly used to control vehicle vibration; however, in the emulation system, the at least one FG 22 provides the ability to generate vibrations in electric vehicle 10 such that the operational feel emulates existing and historic internal combustion engine vehicles. Thus, the disclosed emulation system creates an experience corresponding to operation of an internal combustion engine vehicle while enjoying the benefits of electric vehicle 10. The at least one FG 22 may be a circular FG (CFG), a linear FG (LFG), or a combination of both CFGs and LFGs. FIG. 6 depicts a typical electrical schematic of a linear force generator and FIG. 8 depicts an electrical schematic of a typical circular force generator. As known to those skilled in the art, a linear force generator 30, as depicted in FIG. 7, includes a mass 32. In this instance mass 32 corresponds to a magnet 34 movably supported on a shaft 36. At least one spring 37 provides centering force to magnet 34. Finally, linear force generator 30 includes a coil 38. Activation of coil 38, in response to a demand signal from FG controller 24, produces movement in magnet 34 resulting in the generation of vibrations.

The schematic provided in FIG. 8 corresponds to a circular force generator having two rotating imbalance masses spinning in the same direction (co-rotating) and at the same frequency as the rotating force vector is controlled. Both eccentrics (mA and mB) create rotating forces vectors by their respective centrifugal forces that can be vectorially summed to create a controllable rotating force vector also rotating at the same frequency. However, other circular force generators will perform satisfactorily in the emulation system.

In one embodiment, the emulation system includes at least one FG 22 attached to or integrated with the chassis 12 and/or the passenger cabin 14. The emulation system also includes at least one FG controller 24 in electronic communication with the at least one FG 22 and the CAN BUS network 18. FG controller 24 receives data via CAN BUS network 18 from a variety of data sources selected for their ability to convey data representative of changes in vehicle operation. In particular, the data source should provide data that may be interpreted and applied for the purpose of generating a signal for emulating the operation of a vehicle powered by an ICE. Such data sources may include a vehicle speed sensor 15, an accelerator position sensor 21 and an electric motor controller 17. Data received from electric motor controller 17 will typically correspond to the current torque or power demand placed on electric motor 16. FG controller 24 includes programming suitable for interpreting and using the data received from these data sources to generate a demand signal. FG controller 24 is also programmed to transmit the demand signal to FG 22. The demand signal controls FG 22 and instructs FG 22 to generate vibrations corresponding to the then current operational condition of vehicle 10.

In another embodiment, FG 22 may be attached to or integrated with locations other than chassis 12. For example, FG 22 may be incorporated into passenger cabin 14, the only limitation on the location of FG 22 relates to the ability to induce at least one vibrational pattern or resonance based upon the vehicle speed and/or position of the accelerator 20. As noted above, in some instances chassis 12 may be in the configuration of a unibody. Since unibody vehicles lack a traditional frame, the location of FG 22 may be any convenient location suitable for transmitting the desired vibrations to the occupants of the vehicle's passenger cabin. Likewise, for vehicles having a separate frame as chassis 12, FG 22 may be incorporated into the frame or as part of body 11 so long as the location conveys vibrations to occupants within passenger cabin 14. Thus, one or more FGs 22 may be secured under the seats, in contact with the steering control mechanism, behind door panels and positioned to manipulate the hood and trunk lid of vehicle 10. Use of multiple FGs 22 will enhance the overall emulation of an internal combustion engine.

As described above, each FG 22 will receive a demand signal from FG controller 24 directing operation of FG 22 to produce vibrations sufficient to emulate the feel of an internal combustion engine vehicle to at least one passenger within the passenger cabin 14. The generated vibrations travel through body 11 of vehicle 10 to passenger cabin 14 or through chassis 12 to body 11 and passenger cabin 14.

In another embodiment, the emulation system further includes an acoustic emulator sub-system. Acoustic emulator sub-system includes an acoustic emulator 26 and an acoustic emulator controller 27. As depicted in FIG. 1, at least one FG controller 24, CAN BUS network 18, and optional acoustical emulator controller 27 are all directly or indirectly in electronic communication with each other. As illustrated, at least one FG controller 24 is in electronic communication with both CAN BUS network 18 and the optional acoustic emulator controller 27. Acoustic emulator 26 may be any one or more conventional audio speakers configured to produce sounds corresponding to the frequency range of engine noise and/or engine exhaust noise. When the emulation system includes the optional acoustic emulator sub-system, the two systems must be coordinated in order to produce the desired emulation of an ICE. Coordination of the systems will be discussed below in the description of the method of emulating an ICE.

The passengers' emulated "feel" of an internal combustion engine vehicle is controlled by the at least one FG controller 24 and the CAN BUS network 18. Emulation of an internal combustion engine vehicle is both a physical feeling and an auditory sensation by the at least one passenger. Therefore, to further enhance the emulation of an internal combustion vehicle, acoustic emulator controller 27 receives the same data from CAN BUS network 18 as FG controller 24, i.e. vehicle speed data, accelerator position data and electric motor 16 torque or power demand. Acoustic emulator controller 27 includes programming which interprets the received data and generates an audio demand signal. Acoustic emulator controller is also programmed to transmit the audio demand signal to acoustic emulator 26. Acoustic emulator 26 upon receipt of the audio demand signal generates an audio output corresponding to the current operational condition of the vehicle. For example, during acceleration, acoustic emulator may emit an audio output corresponding to any desired internal combustion engine increasing in RPM while also emulating the sound of the engine exhaust under such conditions. Likewise, during deacceleration, acoustic emulator 26 will receive an appropriate audio demand signal directing the production of audio output corresponding to the change in engine speed.

The emulation system disclosed herein provides at least four modes of interest. The first mode is an idle mode where the electric vehicle 10 is in a stopped/non-moving position. In this mode the emulation system provides the sensation of an internal combustion system operating while idling between 600 revolutions per minute (RPM) and 5000 RPM as the position of the accelerator 20 changes. The at least one FG 22 creates a vibration that emulates the RPM of the internal combustion engine that is idling with an operating increasing or decreasing the RPM demand on the engine. In one embodiment for the idle mode, the electric vehicle 10 is in a stopped position and will not move as the accelerator 20 is changed. In one embodiment for the idle mode, the electric vehicle 10 is able to emulate similar changes in an internal combustion engine RPM change as the accelerator 20 is changed. In a non-limiting example, a sports car is the electric vehicle 10 and the operator wishes to have the feeling of the engine "revving" and "creating engine power" as the operator depresses and releases the accelerator 20 while the electric vehicle is motionless, for example when the transmission is in neutral.

In the second mode the emulation system provides a sensation of acceleration/deceleration emulating the internal combustion engine vehicle in motion. The emulation creates the feeling of the demand on an internal combustion engine as the vehicle accelerates, decelerates, is in a cruise condition, and/or has a load change (e.g., going up or down steep hills). In this mode, FG controller 24 generates the demand signal in response to data received from at least accelerator position sensor 21 corresponding to the position of accelerator 20. More typically, FG controller 24 will receive via CAN BUS network 18 data from accelerator position sensor 21, vehicle speed sensor 15 and information relating to torque/power demand on electric motor 16 from electric motor controller 17. FG controller 24 programming calibrates the received date to determine an analogous RPM of an internal combustion engine vehicle in motion. Then FG controller 24 transmits a signal directing operation of FG(s) 22 to create vibrations emulating the sensation corresponding to the speed of the electric vehicle including whether or not the vehicle is accelerating, decelerating, or cruising. In a non-limiting example, the electric vehicle 10 operator wishes to have the feedback of the engine running while in motion and the at least one FG 22 induces vibrations in response to the demand signal that emulate the demand on the engine for a given speed and/or load. Thus, the emulation system controls and directs FG(s) 22 to emulate and track what would be an acceleration/deceleration event for an internal combustion engine change in RPM in response to accelerator position and/or other received data.

The third mode is a gear shift mode that emulates an internal combustion engine vehicle having a transmission going through the various gear shifts as the internal combustion engine vehicle is accelerating or decelerating. The electric vehicle undergoes changes in the felt vibrations from the at least one FG 22 during gear shift mode emulation and as the electric vehicle 10 accelerates or decelerates. Based upon speed, acceleration/deceleration, and demand from the accelerator the emulated feeling changes for the at least one passenger. In a non-limiting example, a sports car is the electric vehicle 10 and the operator wishes to rapidly accelerate yet wishes to have that sensation of gears shifting. In this example, the operator feels a change of the vibrations that emulate like those of an internal combustion engine sports car undergoing a gear change. There can be any number of emulated gear shift changes for the electric vehicle 10.

The fourth mode is a safety enhancement mode where the at least one FG 22 provides additional feedback based upon an unsafe condition. For example, an owner of the electric vehicle 10 may wish to create a speed governor that allows the operator of the electric vehicle 10 to exceed a set speed, but introduces an unpleasant vibration felt through the passenger cabin 14 by all occupants. Similarly, the same owner may wish to enhance existing safety warning devices such as lane departure warnings so that all passenger cabin 14 occupants feel the vibration(s) when the electric vehicle inadvertently departs a set lane. In a non-limiting example, the at least one FG 22 is driven on/off (neutralized) at a frequency in the range of 0.5 to 2Hz to create the enhanced safety warning.

All four modes are capable of being seamlessly integrated together and/or can be individually implemented by the original equipment manufacturers (OEMs). Depending upon the OEM desires, one or more of the modes may be user/owner selectable, emulation specific (i.e., tied to a specific internal combustion engine), and/or may be operator/owner controlled/set. These tunable options related to the vibration from the at least one FG 22 are based upon a preset choice of options, such as the immediately preceding examples.

In each mode, FG controller transmits a demand signal directing operation of FG(s) 22 to create the desired vibration corresponding to the action to be simulated. In order to generate the demand signal, FG controller 24 receives via CAN BUS network 18 data from accelerator position sensor 21, vehicle speed sensor 15 and information relating to torque/power demand on electric motor 16 from electric motor controller 17. FG controller 24 programming calibrates the received date to determine the necessary vibrations the desired emulation mode. Then FG controller 24 transmits a signal directing operation of FG(s) 22 to create vibrations corresponding to the one or operational modes. Thus, the resulting demand signal controls and directs FG(s) 22 to produce vibrations which pass to passenger cabin 14 and produce the operational "feel" of an internal combustion powered vehicle experiencing the same operational conditions.

If the optional acoustical emulator controller 27 is paired with the at least one FG controller 24, the combination of the two are able to synchronize and emulate both the feel and the sound of an internal combustion engine vehicle. In this embodiment, either emulator controller 27 or FG controller 24 may be programmed to manage the overall operation of the emulation system. Either controller will coordinate and manage operation of the other controller to ensure simultaneous operation of FG(s) 22 and acoustic emulator(s) 26 thereby providing a seamless emulation of an ICE operating under the particular conditions at that time.

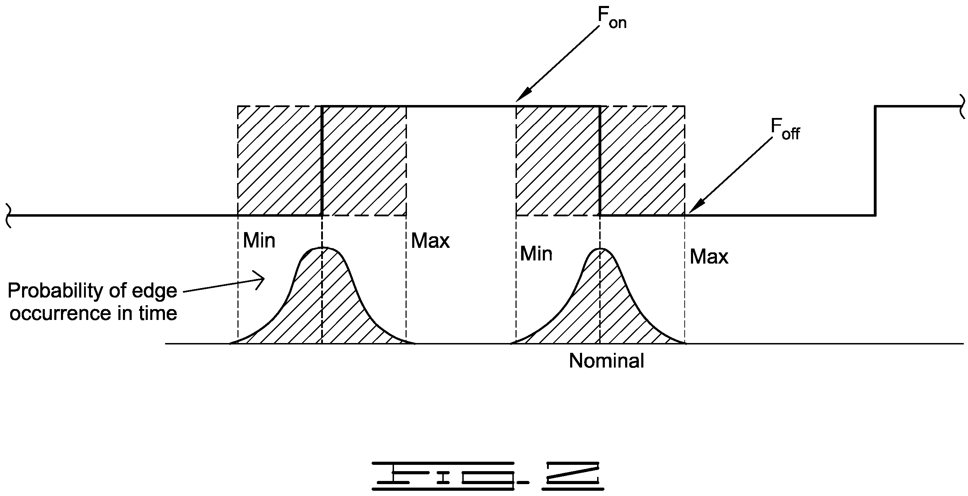

Referring to FIG. 2, a non-limiting example using the emulation system describe above is illustrated. The graph of FIG. 2 represents operating the emulation system in a manner to emulate the idling of an 8-cylinder internal combustion engine. In general, an 8-cylinder ICE idles at about 600 RPM or 10Hz with an exhaust pulse frequency of 40Hz and a complete-firing-order frequency of 5Hz. To emulate this operation, FG 22 vibration frequency will commonly be around 40Hz as this frequency will readily transfer through and into the vehicle structure 11. In the example of FIG. 2, FG 22 generates vibrational force at a frequency of 35Hz, which is assumed to be the electric vehicle body mode/resonance in the example. The vibrational force from the at least one FG 22 is modulated at 5Hz to match the nominal complete-firing order frequency. For example, a 50% nominal duty cycle pulse width modulation where the at least one FG 22 goes from a set force to zero force with a random deviation in the period. Finally, to simulate the random variation in idle RPM, a random jitter may be applied to the modulation of FG 22 vibrations.

FG(s) 22 suitable for use in the emulation system may produce between 0.5 Newtons of force and about 60 Newtons of force. Typically, FG(s) 22 are selected based on the size of electric vehicle 10 and the desired internal combustion engine to be emulated, e.g. V8, V6, I4, and/or turbocharged engines. FG(s) 22 will produce forces necessary to shake the passenger cabin 14 and create the emulated feeling. If necessary, larger FG(s) 22 with larger force capabilities may be used. Also, combinations of more than one FG 22 may be used to emulate the feeling of an internal combustion engine vehicle.

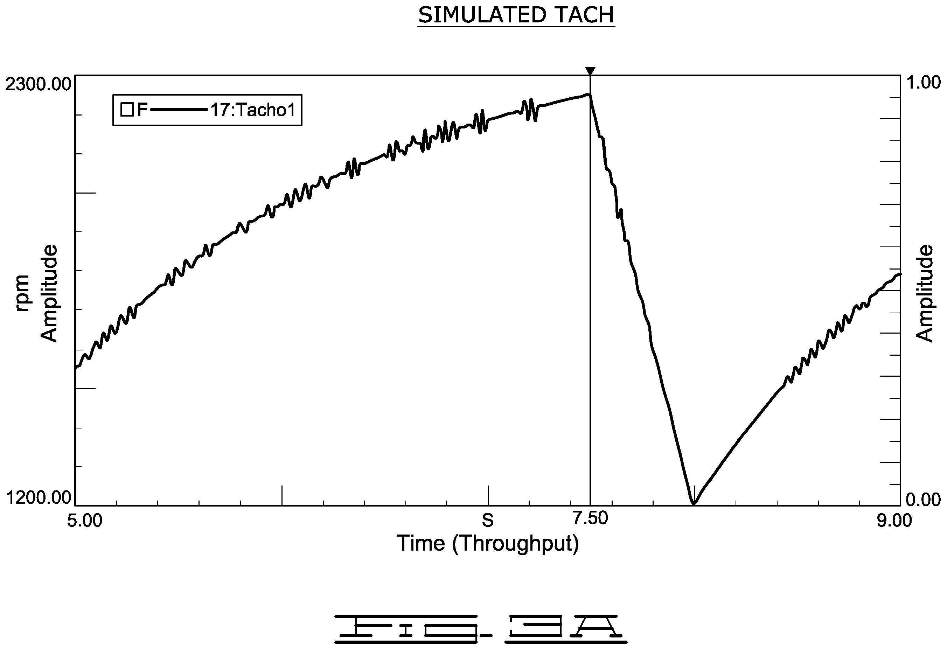

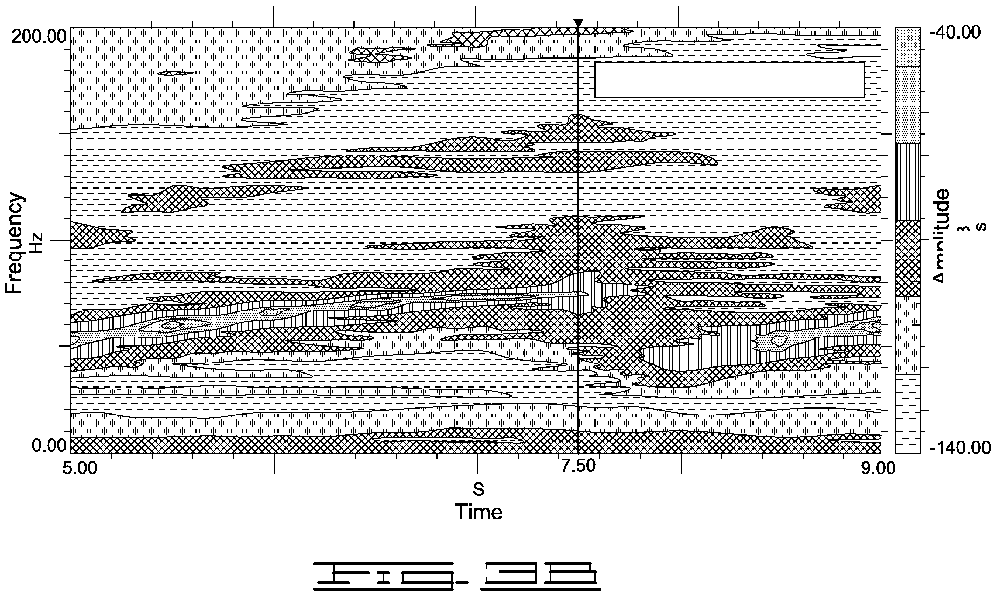

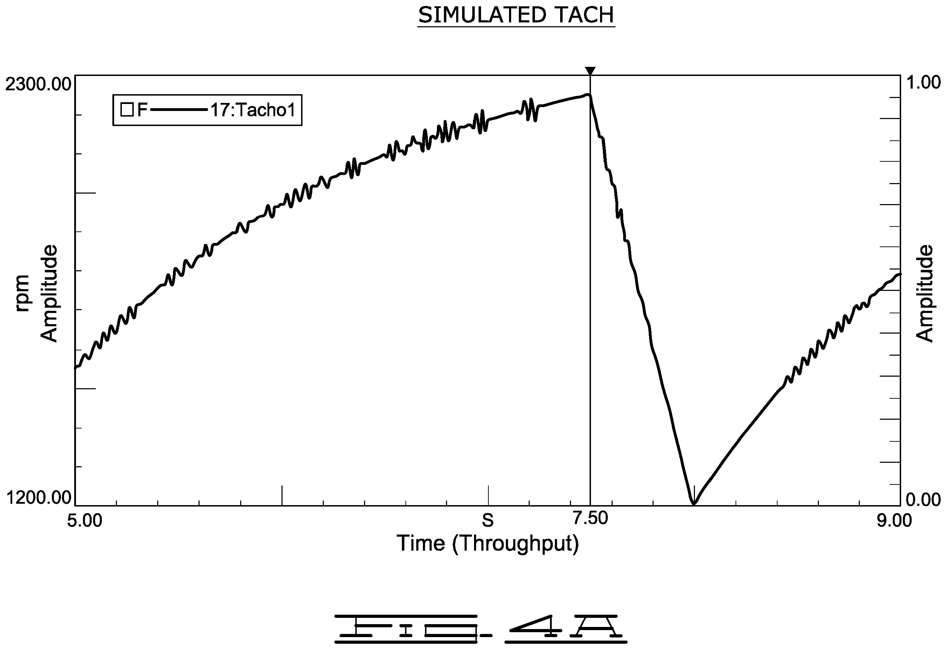

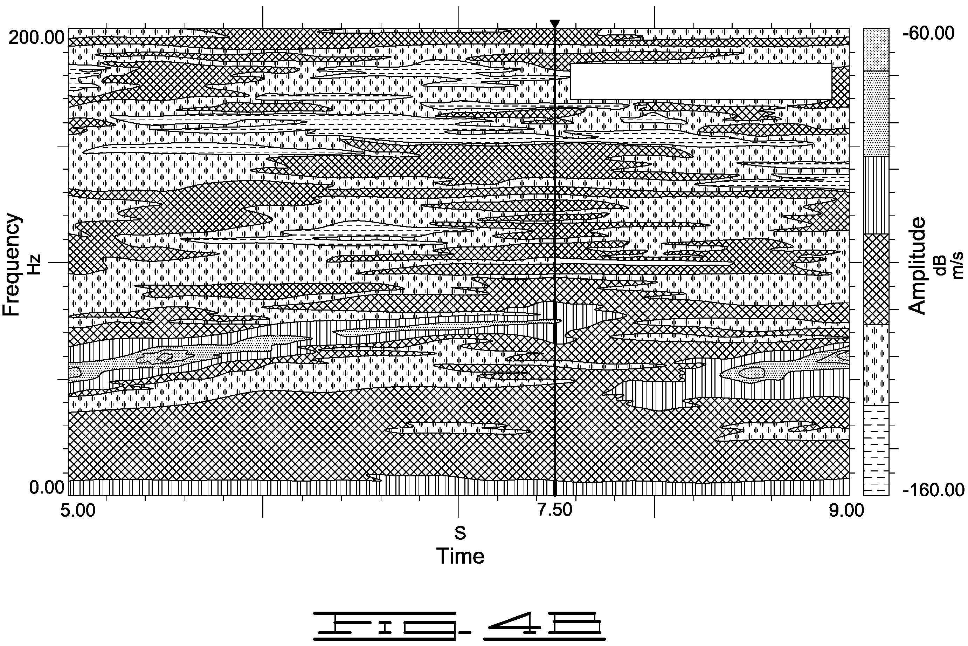

Referring to FIGS. 3A-4B, a non-limiting example of a gear shift mode is illustrated on a passenger side (FIGS. 3A and 3B) and on a driver side (FIGS. 4A and 4B) of the passenger cabin 14. In these examples, at least one FG(s) 22 generates a vibration force at frequency between 0 Hz and 200 Hz based upon a measured acceleration of an internal combustion engine vehicle in motion. Corresponding with the frequency, the simulated internal combustion engine is operating between 2400 RPM and 4600 RPM. When the example vehicle shifts gears, the frequency and vibration felt on the passenger's side and the driver's side of the passenger cabin 14 drops with the change in RPM. The example data shows that the frame and seat vibration changes through RPM due to the electric vehicle 10 and passenger cabin 14 resonances at different frequencies.

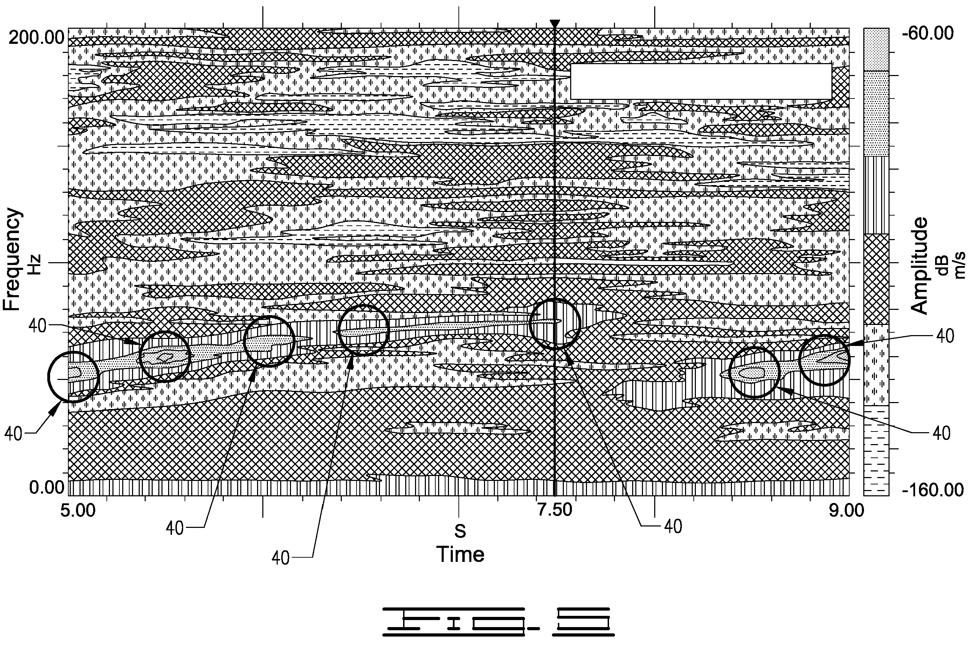

Referring to FIG. 5, another non-limiting example illustrates transient hot spots 40 during acceleration of an internal combustion engine vehicle. Hot spots 40 indicate the vibration input necessary for a typical V8 internal combustion engine and the associated change in RPM as the vehicle accelerates and changes gears about around 7.5 seconds. These hot spots 40 indicate the timing and manner in which at least one FG 22 will induce a vibration at the same frequency based upon the emulated internal combustion engine's RPM.

A method of emulating the internal combustion engine in electric vehicle 22 is provided. In this method, CAN BUS network 18 provides data communication between vehicle speed sensor 15, accelerator position sensor 21, electric motor controller 17, FG controller 24 and optional acoustic emulator controller 27. In some embodiments, FG(s) 22 and optional acoustic emulator(s) 26 may receive signals from FG controller 24 and optional acoustic emulator controller 27 via CAN BUS network; however, in most instances FG controller 24 will have a direct link to FG(s) 22 and optional acoustic emulator controller 27 will have a direct link to optional acoustic emulator(s) 26. In response to operational changes in vehicle 10, FG controller 24 will receive data from vehicle speed sensor 15, accelerator position sensor 21, electric motor controller 17. The data will reflect changes in vehicle speed, alteration in the position of accelerator 20 and current torque or power demand on electric motor. To emulate the response commonly produced by an ICE, programming within FG controller 24 will interpret the data, generate a demand signal and transmit the demand signal to FG(s) 22. The demand signal includes the necessary information to control and direct operation of FG(s) 22. Thus, each FG 22 will produce a vibration which can be sensed within passenger cabin 14. Since FG 22 is secured to chassis 12, a predetermined body panel or a location within passenger cabin 14 of vehicle 10, the resulting vibrations pass to passenger cabin 14 emulating an operational condition of an internal combustion engine such that passengers in passenger cabin experience a "feel" corresponding to the operation of a vehicle powered by an internal combustion engine. Thus, based upon the demand signal received from at least one FG controller 24, at least one FG 22 creates a vibration force that emulates the operational characteristic of vehicle powered by an internal combustion engine.

When an acoustical emulator sub-system is included as part of the emulator system, FG controller 24 and acoustic emulator controller 27 will be programmed to provide synchronous operation of FG(s) 22 and acoustic emulator 26. Further, to provide the desired emulation, acoustic emulator controller 27 will receive the same data as FG controller 24. Either acoustic emulator controller 27 or FG controller 24 may take primary control of emulation operations. If FG controller 24 has primary control, then FG controller will be programmed to manage data signals such that upon directing operation of acoustic emulator controller 27, the timing of the demand signal from FG controller 24 will arrive at FG(s) 22 at the same time as acoustic emulator 26 receives the audio demand signal from acoustic emulator controller 27. Likewise, if acoustic emulator controller 27 has primary control, then acoustic controller 27 will be programmed to manage data signals such that upon directing operation of FG controller 24, the timing of the audio demand signal from acoustic emulator controller 27 will arrive at acoustic emulator 26 at the same time as FG(s) 22 receives the demand signal from FG controller 24. This in either configuration, acoustic emulator 26 and FG(s) 22 received the appropriate audio demand signal and demand signal in synchronization thereby producing an emulation of a vehicle powered by an ICE undergoing the operational changes determined by the indicated sensors.

Although the present subject matter has been described in terms of certain preferred embodiments, the scope of the invention is defined by the appended claims.

## Claims

1. A system for emulating the feel of an internal combustion engine during the operation of an electric vehicle comprising:
an electric vehicle (10) having a chassis (12);
an electric motor (16) supported by said chassis (12);
an accelerator (20), said accelerator controls operation of said electric motor (16);
a data source (15, 21) capable of providing data representative of changes in operation of said electric vehicle (10);
a force generator controller (24), said force generator controller (24) in data communication with said data source (15, 21), said force generator controller (24) programmed to produce a first demand signal and at least one additional demand signal, wherein the first demand signal corresponds to an idle mode when the electric vehicle is in a stopped position and the additional demand signal corresponds to any one of an acceleration/ deceleration mode, a gear shift mode or a safety enhancement mode, wherein the idle mode provides the sensation of an internal combustion system operating while idling between 600 revolutions per minute, RPM, and 5000 RPM as the position of the accelerator (20) changes, wherein the acceleration/deceleration mode provides the feeling of the demand on an internal combustion engine as the vehicle accelerates, decelerates, is in a cruise condition, and/or has a load change, wherein the gear shift mode emulates an internal combustion engine vehicle having a transmission going through the various gear shifts as the internal combustion engine vehicle is accelerating or decelerating and wherein the safety enhancement mode introduces an unpleasant vibration felt through the passenger cabin by all occupants based upon an unsafe condition;
the force generator controller configured to select and produce the first demand signal or the additional demand signal in response to data received from said data source and said force generator controller configured to transmit said first demand signal or the additional demand signal to a first circular force generator (22) secured to the chassis of the vehicle at a first location;
said first circular force generator (22) configured to produce vibrations upon receipt of said first demand signal or the additional demand signal from said force generator controller such that the first circular force generator (22) at the first location will convey vibrations to an interior of a passenger cabin of the vehicle, wherein the vibrations emulate the mode of operation corresponding to the first demand signal or the additional demand signal in an internal combustion engine vehicle.

2. The system of claim 1, further comprising an acoustic emulator sub-system, the acoustic emulator subsystem comprising:
an acoustic emulator (26); and
an acoustic emulator controller (27), said acoustic emulator controller in data communication with at least one of a vehicle speed sensor and an accelerator position sensor, and wherein said acoustic emulator controller is programmed to generate an audio demand signal in response to data received from at least one of the vehicle speed sensor and the accelerator position sensor and transmits said audio demand signal to said acoustic emulator,
the acoustic emulator configured to produce an audio output corresponding to an operating condition of the vehicle in response to the audio demand signal.

3. The system of claim 2, wherein the acoustic emulator controller (27) and the force generator controller (24) are programmed to provide synchronous operation of the first circular force generator and the acoustic emulator.

4. The system of any preceding claim, wherein said system includes a second force generator secured at a second location wherein upon receipt of the first demand signal, generation of vibrations by the second force generator at the second location provides for vibration of a first body panel of said electric vehicle.

5. The system of any of claims 1 to 3, wherein the data source includes a vehicle speed sensor (15) and an accelerator position sensor (21), and in the acceleration/ deceleration mode said additional demand signal includes data corresponding to the position of accelerator (20) and the speed of the vehicle, the additional demand signal configured to control said first circular force generator and cause said first circular force generator to produce vibrations which emulate the speed of the electric vehicle (10) and emulate the demand on an internal combustion engine.

6. The system of any of claims 1 to 3, wherein the data source includes a vehicle speed sensor (15) and an accelerator position sensor (21), and in the gear shift mode said additional demand signal includes data corresponding to the position of accelerator (20) and the speed of the vehicle, the additional demand signal configured to control said first circular force generator and cause said first circular force generator to produce vibrations which emulate a changing of gears of a vehicle driven by an internal combustion engine and an automatic transmission.

7. The system of any of claims 1 to 3, wherein the data source includes a vehicle speed sensor (15) and in the safety enhancement mode said additional demand signal includes data corresponding to the speed of the vehicle, the additional demand signal configured to control said first circular force generator and cause said first circular force generator to produce vibrations which indicate operation of said electric vehicle at a speed in excess of a predetermined maximum speed.

8. The system of any of claims 1 to 3, wherein said system includes a second force generator secured at a second location wherein vibrations generated by said second force generator will cause movement of a first body panel of said electric vehicle and a third force generator secured at a third location wherein vibrations generated by said third force generator will cause movement of a second body panel of said electric vehicle, wherein said first body panel is a hood and said second body panel is a trunk lid.

9. A method of emulating the feel of an internal combustion engine during the operation of an electric vehicle comprising:
said electric vehicle (10) comprising:
a chassis (12);
an electric motor (16) supported by said chassis (12);
an accelerator (20), said accelerator configured to control operation of said electric motor;
at least one data source (15, 21) capable of providing data representative of changes in operation of said electric vehicle;
a first circular force generator (22) secured to the chassis (12) of the vehicle at a location, the vehicle having a passenger cabin, the passenger cabin having an interior;
a force generator controller (24), said force generator controller programmed to receive data from said at least one data source and programmed to use data received from the data source to generate a first demand signal and at least one additional demand signal, wherein the first demand signal corresponds to an idle mode when the electric vehicle is in a stopped position and the additional demand signal corresponds to any one of an acceleration/ deceleration mode, a gear shift mode or a safety enhancement mode, wherein the idle mode provides the sensation of an internal combustion system operating while idling between 600 revolutions per minute, RPM, and 5000 RPM as the position of the accelerator (20) changes, wherein the acceleration/deceleration mode provides the feeling of the demand on an internal combustion engine as the vehicle accelerates, decelerates, is in a cruise condition, and/or has a load change, wherein the gear shift mode emulates an internal combustion engine vehicle having a transmission going through the various gear shifts as the internal combustion engine vehicle is accelerating or decelerating and wherein the safety enhancement mode introduces an unpleasant vibration felt through the passenger cabin by all occupants based upon an unsafe condition;
the force generator controller configured to select and produce the first demand signal or the additional demand signal in response to data received from the data source and the force generator controller configured to transmit said first demand signal or the additional demand signal to the first circular force generator;
said force generator configured to produce vibrations upon receipt of said first demand signal or the additional demand signal from said force generator controller;
using said data source to monitor changes in the operation of said electric vehicle and produce data representative of changes in operation of said electric vehicle;
transmitting said data representative of changes in operation of said electric vehicle to said force generator controller;
said force generator controller receiving said data representative of changes in operation of said electric vehicle and said force generator controller interpreting the received data thereby selecting a first demand signal or an additional demand signal;
transmitting said selected first demand signal or additional demand signal from said force generator controller to said first circular force generator;
using said force generator to produce and transmit vibrations to the interior of the passenger cabin, wherein the vibrations emulate the mode corresponding to the first demand signal or the additional demand signal in an internal combustion engine vehicle.

10. The method of claim 9, wherein said electric vehicle further comprises an acoustic emulator sub-system, the acoustic emulator subsystem comprising:
an acoustic emulator (26); and,
an acoustic emulator controller (27) in data communication with said data source and/or said force generator controller, said acoustic emulator controller programmed to generate an audio demand signal in response to data received from the data source and/or the force generator controller and further comprising the steps of:
transmitting said audio demand signal to an acoustic emulator;
using said acoustic emulator to produce an audio signal sufficient to emulate the sound of an internal combustion engine, the audio signal detectible within the passenger cabin.

11. The method of claim 10, wherein the force generator controller (24) and the acoustic emulator controller (27) are programmed to provide synchronous operator of the first circular force generator and the acoustic emulator and further comprising the step of selecting either the force generator controller or the acoustic emulator controller as a primary controller and using the primary controller to manage data signals such that timing of the first demand signal or the additional demand signal from the force generator controller to the first circular force generator will arrive at the first circular force generator at the same time as the first demand signal or the additional demand signal from the acoustic emulator controller arrives at said acoustic emulator thereby producing an audio signal and a vibration sufficient to emulate the sound of an internal combustion engine and the vibrations of an internal combustion engine to emulate the operation of an internal combustion engine and a sensation of operating a vehicle controlled by an internal combustion engine within the passenger cabin.

12. The method of claim 9, wherein said demand signal controls said first circular force generator and causes said first circular force generator to produce vibrations which emulate an internal combustion engine undergoing an increase in revolutions per minute.

13. The method of claim 9, wherein said demand signal controls said first circular force generator and causes said first circular force generator to produce vibrations which emulate an internal combustion engine undergoing a decrease in revolutions per minute.

14. The method of claim 9, wherein said additional demand signal controls said first circular force generator and, in the gear shift mode, causes said first circular force generator to produce vibrations which emulate a changing of gears of a vehicle driven by an internal combustion engine and an automatic transmission.

## Patentansprüche

1. Ein System zum Emulieren des Gefühls eines Verbrennungsmotors während des Betriebs eines Elektrofahrzeugs, das Folgendes beinhaltet:
ein Elektrofahrzeug (10), das ein Fahrgestell (12) aufweist;
einen Elektromotor (16), der von dem Fahrgestell (12) getragen wird;
ein Gaspedal (20), wobei das Gaspedal den Betrieb des Elektromotors (16) steuert;
eine Datenquelle (15, 21), die in der Lage ist, Daten bereitzustellen, die für Änderungen im Betrieb des Elektrofahrzeugs (10) repräsentativ sind;
eine Krafterzeugersteuerung (24), wobei die Krafterzeugersteuerung (24) in Datenkommunikation mit der Datenquelle (15, 21) steht, wobei die Krafterzeugersteuerung (24) programmiert ist, um ein erstes Anforderungssignal und mindestens ein zusätzliches Anforderungssignal zu produzieren, wobei das erste Anforderungssignal einem Leerlaufmodus entspricht, wenn sich das Elektrofahrzeug in einer angehaltenen Position befindet, und das zusätzliche Anforderungssignal einem beliebigen von einem Beschleunigungs-/Verzögerungsmodus, einem Gangschaltmodus oder einem Sicherheitsverbesserungsmodus entspricht, wobei der Leerlaufmodus die Empfindung eines Verbrennungssystems bereitstellt, das im Leerlauf zwischen 600 Umdrehungen pro Minute, U/min, und 5000 U/min betrieben wird, wenn sich die Position des Gaspedals (20) ändert, wobei der Beschleunigungs-/Verzögerungsmodus das Gefühl der Anforderung an einen Verbrennungsmotor bereitstellt, wenn das Fahrzeug beschleunigt, verzögert, sich in einem Konstantfahrtzustand befindet und/oder eine Laständerung aufweist, wobei der Gangschaltmodus ein ein Getriebe aufweisendes Verbrennungsmotorfahrzeug emuliert, das die verschiedenen Gangschaltungen durchläuft, wenn das Verbrennungsmotorfahrzeug beschleunigt oder verzögert, und wobei der Sicherheitsverbesserungsmodus eine unangenehme Vibration einführt, die von allen Insassen aufgrund eines unsicheren Zustands durch die Fahrgastkabine gefühlt wird;
wobei die Krafterzeugersteuerung konfiguriert ist, um das erste Anforderungssignal oder das zusätzliche Anforderungssignal als Reaktion auf Daten, die von der Datenquelle empfangen werden, auszuwählen und zu produzieren, und die Krafterzeugersteuerung konfiguriert ist, um das erste Anforderungssignal oder das zusätzliche Anforderungssignal an einen ersten Kreiskrafterzeuger (22) zu übertragen, der an einer ersten Stelle an dem Fahrgestell des Fahrzeugs befestigt ist;
wobei der erste Kreiskrafterzeuger (22) konfiguriert ist, um bei Empfang des ersten Anforderungssignals oder des zusätzlichen Anforderungssignals von der Krafterzeugersteuerung Vibrationen zu produzieren, sodass der erste Kreiskrafterzeuger (22) an der ersten Stelle Vibrationen in ein Inneres einer Fahrgastkabine des Fahrzeugs übermittelt, wobei die Vibrationen den Betriebsmodus in einem Verbrennungsmotorfahrzeug emulieren, der dem ersten Anforderungssignal oder dem zusätzlichen Anforderungssignal entspricht.

2. System gemäß Anspruch 1, ferner beinhaltend ein Akustikemulator-Teilsystem, wobei das Akustikemulator-Teilsystem Folgendes beinhaltet:
einen Akustikemulator (26); und
eine Akustikemulatorsteuerung (27), wobei die Akustikemulatorsteuerung in Datenkommunikation mit mindestens einem von einem Fahrzeuggeschwindigkeitssensor und einem Gaspedalpositionssensor steht und wobei die Akustikemulatorsteuerung programmiert ist, um ein Audioanforderungssignal als Reaktion auf Daten zu erzeugen, die von mindestens einem von dem Fahrzeuggeschwindigkeitssensor und dem Gaspedalpositionssensor empfangen werden, und das Audioanforderungssignal an den Akustikemulator überträgt,
wobei der Akustikemulator konfiguriert ist, um eine Audioausgabe zu produzieren, die einem Betriebszustand des Fahrzeugs entspricht, als Reaktion auf das Audioanforderungssignal.

3. System gemäß Anspruch 2, wobei die Akustikemulatorsteuerung (27) und die Krafterzeugersteuerung (24) programmiert sind, um einen synchronen Betrieb des ersten Kreiskrafterzeugers und des Akustikemulators bereitzustellen.

4. System gemäß einem der vorhergehenden Ansprüche, wobei das System einen zweiten Krafterzeuger umfasst, der an einer zweiten Stelle befestigt ist, wobei bei Empfang des ersten Anforderungssignals die Erzeugung von Vibrationen durch den zweiten Krafterzeuger an der zweiten Stelle eine Vibration eines ersten Karosseriepaneels des Elektrofahrzeugs bereitstellt.

5. System gemäß einem der Ansprüche 1 bis 3, wobei die Datenquelle einen Fahrzeuggeschwindigkeitssensor (15) und einen Gaspedalpositionssensor (21) umfasst und in dem Beschleunigungs-/Verzögerungsmodus das zusätzliche Anforderungssignal Daten umfasst, die der Position des Gaspedals (20) und der Geschwindigkeit des Fahrzeugs entsprechen, wobei das zusätzliche Anforderungssignal konfiguriert ist, um den ersten Kreiskrafterzeuger zu steuern und zu bewirken, dass der erste Kreiskrafterzeuger Vibrationen produziert, die die Geschwindigkeit des Elektrofahrzeugs (10) emulieren und die Anforderung an einen Verbrennungsmotor emulieren.

6. System gemäß einem der Ansprüche 1 bis 3, wobei die Datenquelle einen Fahrzeuggeschwindigkeitssensor (15) und einen Gaspedalpositionssensor (21) umfasst und in dem Gangschaltmodus das zusätzliche Anforderungssignal Daten umfasst, die der Position des Gaspedals (20) und der Geschwindigkeit des Fahrzeugs entsprechen, wobei das zusätzliche Anforderungssignal konfiguriert ist, um den ersten Kreiskrafterzeuger zu steuern und zu bewirken, dass der erste Kreiskrafterzeuger Vibrationen produziert, die eine Änderung von Gängen eines Fahrzeugs emulieren, das von einem Verbrennungsmotor und einem Automatikgetriebe angetrieben wird.

7. System gemäß einem der Ansprüche 1 bis 3, wobei die Datenquelle einen Fahrzeuggeschwindigkeitssensor (15) umfasst und in dem Sicherheitsverbesserungsmodus das zusätzliche Anforderungssignal Daten umfasst, die der Geschwindigkeit des Fahrzeugs entsprechen, wobei das zusätzliche Anforderungssignal konfiguriert ist, um den ersten Kreiskrafterzeuger zu steuern und zu bewirken, dass der erste Kreiskrafterzeuger Vibrationen produziert, die den Betrieb des Elektrofahrzeugs bei einer Geschwindigkeit anzeigen, die eine vorbestimmte Maximalgeschwindigkeit überschreitet.

8. System gemäß einem der Ansprüche 1 bis 3, wobei das System Folgendes umfasst:
einen zweiten Krafterzeuger, der an einer zweiten Stelle befestigt ist, wobei
Vibrationen, die von dem zweiten Krafterzeuger erzeugt werden, eine Bewegung eines ersten Karosseriepaneels des Elektrofahrzeugs bewirken, und einen dritten Krafterzeuger, der an einer dritten Stelle befestigt ist, wobei Vibrationen, die von dem dritten Krafterzeuger erzeugt werden, eine Bewegung eines zweiten Karosseriepaneels des Elektrofahrzeugs bewirken, wobei das erste Karosseriepaneel eine Motorhaube ist und das zweite Karosseriepaneel ein Kofferraumdeckel ist.

9. Ein Verfahren zum Emulieren des Gefühls eines Verbrennungsmotors während des Betriebs eines Elektrofahrzeugs, das Folgendes beinhaltet:
das Elektrofahrzeug (10), das Folgendes beinhaltet:
ein Fahrgestell (12);
einen Elektromotor (16), der von dem Fahrgestell (12) getragen wird;
ein Gaspedal (20), wobei das Gaspedal konfiguriert ist, um den Betrieb des Elektromotors zu steuern;
mindestens eine Datenquelle (15, 21), die in der Lage ist, Daten bereitzustellen, die für Änderungen im Betrieb des Elektrofahrzeugs repräsentativ sind;
einen ersten Kreiskrafterzeuger (22), der an einer Stelle an dem Fahrgestell (12) des Fahrzeugs befestigt ist, wobei das Fahrzeug eine Fahrgastkabine aufweist, wobei die Fahrgastkabine ein Inneres aufweist;
eine Krafterzeugersteuerung (24), wobei die Krafterzeugersteuerung programmiert ist, um Daten von der mindestens einen Datenquelle zu empfangen, und programmiert ist, um von der Datenquelle empfangene Daten zu verwenden, um ein erstes Anforderungssignal und mindestens ein zusätzliches Anforderungssignal zu erzeugen, wobei das erste Anforderungssignal einem Leerlaufmodus entspricht, wenn sich das Elektrofahrzeug in einer angehaltenen Position befindet, und das zusätzliche Anforderungssignal einem beliebigen von einem Beschleunigungs-/Verzögerungsmodus, einem Gangschaltmodus oder einem Sicherheitsverbesserungsmodus entspricht, wobei der Leerlaufmodus die Empfindung eines Verbrennungssystems bereitstellt, das im Leerlauf zwischen 600 Umdrehungen pro Minute, U/min, und 5000 U/min betrieben wird, wenn sich die Position des Gaspedals (20) ändert, wobei der Beschleunigungs-/Verzögerungsmodus das Gefühl der Anforderung an einen Verbrennungsmotor bereitstellt, wenn das Fahrzeug beschleunigt, verzögert, sich in einem Konstantfahrtzustand befindet und/oder eine Laständerung aufweist, wobei der Gangschaltmodus ein ein Getriebe aufweisendes Verbrennungsmotorfahrzeug emuliert, das die verschiedenen Gangschaltungen durchläuft, wenn das Verbrennungsmotorfahrzeug beschleunigt oder verzögert, und
wobei der Sicherheitsverbesserungsmodus eine unangenehme Vibration einführt, die von allen Insassen aufgrund eines unsicheren Zustands durch die Fahrgastkabine gefühlt wird;
wobei die Krafterzeugersteuerung konfiguriert ist, um das erste Anforderungssignal oder das zusätzliche Anforderungssignal als Reaktion auf Daten, die von der Datenquelle empfangen werden, auszuwählen und zu produzieren, und die Krafterzeugersteuerung konfiguriert ist, um das erste Anforderungssignal oder das zusätzliche Anforderungssignal an den ersten Kreiskrafterzeuger zu übertragen;
wobei der Krafterzeuger konfiguriert ist, um bei Empfang des ersten Anforderungssignals oder des zusätzlichen Anforderungssignals von der Krafterzeugersteuerung Vibrationen zu produzieren;
Verwenden der Datenquelle, um Änderungen im Betrieb des Elektrofahrzeugs zu überwachen und Daten zu produzieren, die für Änderungen im Betrieb des Elektrofahrzeugs repräsentativ sind;
Übertragen der Daten, die für Änderungen im Betrieb des Elektrofahrzeugs repräsentativ sind, an die Krafterzeugersteuerung;
wobei die Krafterzeugersteuerung die Daten empfängt, die für Änderungen im Betrieb des Elektrofahrzeugs repräsentativ sind, und die Krafterzeugersteuerung die empfangenen Daten interpretiert, wodurch ein erstes Anforderungssignal oder ein zusätzliches Anforderungssignal ausgewählt wird;
Übertragen des ausgewählten ersten Anforderungssignals oder zusätzlichen Anforderungssignals von der Krafterzeugersteuerung an den ersten Kreiskrafterzeuger;
Verwenden des Krafterzeugers zum Produzieren und Übertragen von Vibrationen in das Innere der Fahrgastkabine, wobei die Vibrationen den Modus in einem Verbrennungsmotorfahrzeug emulieren, der dem ersten Anforderungssignal oder dem zusätzlichen Anforderungssignal entspricht.

10. Verfahren gemäß Anspruch 9, wobei das Elektrofahrzeug ferner ein Akustikemulator-Teilsystem beinhaltet, wobei das Akustikemulator-Teilsystem Folgendes beinhaltet:
einen Akustikemulator (26); und
eine Akustikemulatorsteuerung (27) in Datenkommunikation mit der Datenquelle und/oder der Krafterzeugersteuerung, wobei die Akustikemulatorsteuerung programmiert ist, um ein Audioanforderungssignal als Reaktion auf Daten zu erzeugen, die von der Datenquelle und/oder der Krafterzeugersteuerung empfangen werden, und ferner die folgenden Schritte beinhaltet:
Übertragen des Audioanforderungssignals an einen Akustikemulator;
Verwenden des Akustikemulators, um ein Audiosignal zu produzieren, das ausreicht, um den Ton eines Verbrennungsmotors zu emulieren, wobei das Audiosignal innerhalb der Fahrgastkabine detektierbar ist.

11. Verfahren gemäß Anspruch 10, wobei die Krafterzeugersteuerung (24) und die Akustikemulatorsteuerung (27) programmiert sind, um einen synchronen Betrieb des ersten Kreiskrafterzeugers und des Akustikemulators bereitzustellen, und ferner beinhaltend den Schritt des Auswählens entweder der Krafterzeugersteuerung oder der Akustikemulatorsteuerung als eine primäre Steuerung und Verwenden der primären Steuerung, um Datensignale zu verwalten, sodass das Timing des ersten Anforderungssignals oder des zusätzlichen Anforderungssignals von der Krafterzeugersteuerung an den ersten Kreiskrafterzeuger an dem ersten Kreiskrafterzeuger zur gleichen Zeit ankommt, zu der das erste Anforderungssignal oder das zusätzliche Anforderungssignal von der Akustikemulatorsteuerung an dem Akustikemulator ankommt, wodurch ein Audiosignal und eine Vibration produziert werden, die ausreichen, um den Ton eines Verbrennungsmotors und die Vibrationen eines Verbrennungsmotors zu emulieren, um den Betrieb eines Verbrennungsmotors und eine Empfindung des Betriebs eines durch einen Verbrennungsmotor gesteuerten Fahrzeugs innerhalb der Fahrgastkabine zu emulieren.

12. Verfahren gemäß Anspruch 9, wobei das Anforderungssignal den ersten Kreiskrafterzeuger steuert und bewirkt, dass der erste Kreiskrafterzeuger Vibrationen produziert, die einen Verbrennungsmotor emulieren, der eine Zunahme von Umdrehungen pro Minute erfährt.

13. Verfahren gemäß Anspruch 9, wobei das Anforderungssignal den ersten Kreiskrafterzeuger steuert und bewirkt, dass der erste Kreiskrafterzeuger Vibrationen produziert, die einen Verbrennungsmotor emulieren, der eine Abnahme von Umdrehungen pro Minute erfährt.

14. Verfahren gemäß Anspruch 9, wobei das zusätzliche Anforderungssignal den ersten Kreiskrafterzeuger steuert und in dem Gangschaltmodus bewirkt, dass der erste Kreiskrafterzeuger Vibrationen produziert, die eine Änderung von Gängen eines Fahrzeugs emulieren, das von einem Verbrennungsmotor und einem Automatikgetriebe angetrieben wird.

## Revendications

1. Un système destiné à émuler le ressenti d'un moteur à combustion interne pendant le fonctionnement d'un véhicule électrique comprenant :
un véhicule électrique (10) ayant un châssis (12) ;
un moteur électrique (16) supporté par ledit châssis (12) ;
un accélérateur (20), ledit accélérateur commandant le fonctionnement dudit moteur électrique (16) ;
une source de données (15, 21) capable de fournir des données représentatives de changements dans le fonctionnement dudit véhicule électrique (10) ;
un dispositif de commande de générateur de force (24), ledit dispositif de commande de générateur de force (24) étant en communication de données avec ladite source de données (15, 21), ledit dispositif de commande de générateur de force (24) étant programmé pour produire un premier signal de demande et au moins un signal de demande supplémentaire, où le premier signal de demande correspond à un mode ralenti lorsque le véhicule électrique est dans une position à l'arrêt et le signal de demande supplémentaire correspond à l'un quelconque parmi un mode accélération/décélération, un mode passage de vitesse ou un mode amélioration de la sécurité, où le mode ralenti fournit la sensation d'un système à combustion interne fonctionnant au ralenti entre 600 tours par minute, RPM, et 5 000 RPM tandis que la position de l'accélérateur (20) change, où le mode accélération/décélération fournit l'impression de la demande sur un moteur à combustion interne tandis que le véhicule accélère, décélère, est dans une condition de croisière, et/ou subit un changement de charge, où le mode passage de vitesse émule un véhicule à moteur à combustion interne ayant une boîte de vitesses passant par les divers passages de vitesse tandis que le véhicule à moteur à combustion interne est en train d'accélérer ou de décélérer et où le mode amélioration de la sécurité introduit une vibration désagréable ressentie à travers l'habitacle pour passagers par tous les occupants sur la base d'une condition dangereuse ;
le dispositif de commande de générateur de force étant configuré pour sélectionner et produire le premier signal de demande ou le signal de demande supplémentaire en réponse à des données reçues en provenance de ladite source de données et ledit dispositif de commande de générateur de force étant configuré pour transmettre ledit premier signal de demande ou le signal de demande supplémentaire à un premier générateur de force circulaire (22) assujetti au châssis du véhicule au niveau d'un premier emplacement ;
ledit premier générateur de force circulaire (22) étant configuré pour produire des vibrations lors de la réception dudit premier signal de demande ou du signal de demande supplémentaire en provenance dudit dispositif de commande de générateur de force de telle sorte que le premier générateur de force circulaire (22) au niveau du premier emplacement propagera des vibrations à un intérieur d'un habitacle pour passagers du véhicule, où les vibrations émulent le mode de fonctionnement correspondant au premier signal de demande ou au signal de demande supplémentaire dans un véhicule à moteur à combustion interne.

2. Le système de la revendication 1, comprenant en outre un sous-système d'émulateur acoustique, le sous-système d'émulateur acoustique comprenant :
un émulateur acoustique (26) ; et
un dispositif de commande d'émulateur acoustique (27), ledit dispositif de commande d'émulateur acoustique étant en communication de données avec au moins l'un parmi un capteur de vitesse de véhicule et un capteur de position d'accélérateur, et où ledit dispositif de commande d'émulateur acoustique est programmé pour générer un signal de demande audio en réponse à des données reçues en provenance d'au moins l'un parmi le capteur de vitesse de véhicule et le capteur de position d'accélérateur et transmet ledit signal de demande audio audit émulateur acoustique,
l'émulateur acoustique étant configuré pour produire une sortie audio correspondant à une condition de fonctionnement du véhicule en réponse au signal de demande audio.

3. Le système de la revendication 2, où le dispositif de commande d'émulateur acoustique (27) et le dispositif de commande de générateur de force (24) sont programmés pour fournir un fonctionnement synchrone du premier générateur de force circulaire et de l'émulateur acoustique.

4. Le système de n'importe quelle revendication précédente, où ledit système inclut un deuxième générateur de force assujetti au niveau d'un deuxième emplacement où, lors de la réception du premier signal de demande, la génération de vibrations par le deuxième générateur de force au niveau du deuxième emplacement permet la vibration d'un premier panneau de carrosserie dudit véhicule électrique.

5. Le système de n'importe lesquelles des revendications 1 à 3, où la source de données inclut un capteur de vitesse de véhicule (15) et un capteur de position d'accélérateur (21), et dans le mode accélération/décélération ledit signal de demande supplémentaire inclut des données correspondant à la position d'accélérateur (20) et à la vitesse du véhicule, le signal de demande supplémentaire étant configuré pour commander ledit premier générateur de force circulaire et amener ledit premier générateur de force circulaire à produire des vibrations qui émulent la vitesse du véhicule électrique (10) et émulent la demande sur un moteur à combustion interne.

6. Le système de n'importe lesquelles des revendications 1 à 3, où la source de données inclut un capteur de vitesse de véhicule (15) et un capteur de position d'accélérateur (21), et dans le mode passage de vitesse ledit signal de demande supplémentaire inclut des données correspondant à la position d'accélérateur (20) et à la vitesse du véhicule, le signal de demande supplémentaire étant configuré pour commander ledit premier générateur de force circulaire et amener ledit premier générateur de force circulaire à produire des vibrations qui émulent un changement de vitesses d'un véhicule entraîné par un moteur à combustion interne et une boîte de vitesses automatique.

7. Le système de n'importe lesquelles des revendications 1 à 3, où la source de données inclut un capteur de vitesse de véhicule (15) et dans le mode amélioration de la sécurité ledit signal de demande supplémentaire inclut des données correspondant à la vitesse du véhicule, le signal de demande supplémentaire étant configuré pour commander ledit premier générateur de force circulaire et amener ledit premier générateur de force circulaire à produire des vibrations qui indiquent le fonctionnement dudit véhicule électrique à une vitesse dépassant une vitesse maximale prédéterminée.

8. Le système de n'importe lesquelles des revendications 1 à 3, où ledit système inclut un deuxième générateur de force assujetti au niveau d'un deuxième emplacement où des vibrations générées par ledit deuxième générateur de force amèneront un premier panneau de carrosserie dudit véhicule électrique à se déplacer et un troisième générateur de force assujetti au niveau d'un troisième emplacement où des vibrations générées par ledit troisième générateur de force amèneront un deuxième panneau de carrosserie dudit véhicule électrique à se déplacer, où ledit premier panneau de carrosserie est un capot et ledit deuxième panneau de carrosserie est un couvercle de coffre.

9. Un procédé consistant à émuler le ressenti d'un moteur à combustion interne pendant le fonctionnement d'un véhicule électrique comprenant :
ledit véhicule électrique (10) comprenant :
un châssis (12) ;
un moteur électrique (16) supporté par ledit châssis (12) ;
un accélérateur (20), ledit accélérateur étant configuré pour commander le fonctionnement dudit moteur électrique ;
au moins une source de données (15, 21) capable de fournir des données représentatives de changements dans le fonctionnement dudit véhicule électrique ;
un premier générateur de force circulaire (22) assujetti au châssis (12) du véhicule au niveau d'un emplacement, le véhicule ayant un habitacle pour passagers, l'habitacle pour passagers ayant un intérieur ;
un dispositif de commande de générateur de force (24), ledit dispositif de commande de générateur de force étant programmé pour recevoir des données en provenance de ladite au moins une source de données et étant programmé pour utiliser des données reçues en provenance de la source de données pour générer un premier signal de demande et au moins un signal de demande supplémentaire, où le premier signal de demande correspond à un mode ralenti lorsque le véhicule électrique est dans une position à l'arrêt et le signal de demande supplémentaire correspond à l'un quelconque parmi un mode accélération/décélération, un mode passage de vitesse ou un mode amélioration de la sécurité, où le mode ralenti fournit la sensation d'un système à combustion interne fonctionnant au ralenti entre 600 tours par minute, RPM, et 5 000 RPM tandis que la position de l'accélérateur (20) change, où le mode accélération/décélération fournit l'impression de la demande sur un moteur à combustion interne tandis que le véhicule accélère, décélère, est dans une condition de croisière, et/ou subit un changement de charge, où le mode passage de vitesse émule un véhicule à moteur à combustion interne ayant une boîte de vitesses passant par les divers passages de vitesse tandis que le véhicule à moteur à combustion interne est en train d'accélérer ou de décélérer et
où le mode amélioration de la sécurité introduit une vibration désagréable ressentie à travers l'habitacle pour passagers par tous les occupants sur la base d'une condition dangereuse ;
le dispositif de commande de générateur de force étant configuré pour sélectionner et produire le premier signal de demande ou le signal de demande supplémentaire en réponse à des données reçues en provenance de la source de données et le dispositif de commande de générateur de force étant configuré pour transmettre ledit premier signal de demande ou le signal de demande supplémentaire au premier générateur de force circulaire ;
ledit générateur de force étant configuré pour produire des vibrations lors de la réception dudit premier signal de demande ou du signal de demande supplémentaire en provenance dudit dispositif de commande de générateur de force ;
le fait d'utiliser ladite source de données pour surveiller des changements dans le fonctionnement dudit véhicule électrique et produire des données représentatives de changements dans le fonctionnement dudit véhicule électrique ;
le fait de transmettre lesdites données représentatives de changements dans le fonctionnement dudit véhicule électrique audit dispositif de commande de générateur de force ;
le fait pour ledit dispositif de commande de générateur de force de recevoir lesdites données représentatives de changements dans le fonctionnement dudit véhicule électrique et pour ledit dispositif de commande de générateur de force d'interpréter les données reçues, sélectionnant ainsi un premier signal de demande ou un signal de demande supplémentaire ;
le fait de transmettre ledit premier signal de demande ou signal de demande supplémentaire sélectionné dudit dispositif de commande de générateur de force audit premier générateur de force circulaire ;
le fait d'utiliser ledit générateur de force pour produire et transmettre des vibrations à l'intérieur de l'habitacle pour passagers, où les vibrations émulent le mode correspondant au premier signal de demande ou au signal de demande supplémentaire dans un véhicule à moteur à combustion interne.

10. Le procédé de la revendication 9, où ledit véhicule électrique comprend en outre un sous-système d'émulateur acoustique, le sous-système d'émulateur acoustique comprenant :
un émulateur acoustique (26) ; et,
un dispositif de commande d'émulateur acoustique (27) en communication de données avec ladite source de données et/ou ledit dispositif de commande de générateur de force, ledit dispositif de commande d'émulateur acoustique étant programmé pour générer un signal de demande audio en réponse à des données reçues en provenance de la source de données et/ou du dispositif de commande de générateur de force et
comprenant en outre les étapes consistant en :
le fait de transmettre ledit signal de demande audio à un émulateur acoustique ;
le fait d'utiliser ledit émulateur acoustique pour produire un signal audio suffisant pour émuler le son d'un moteur à combustion interne, le signal audio étant détectable à l'intérieur de l'habitacle pour passagers.

11. Le procédé de la revendication 10, où le dispositif de commande de générateur de force (24) et le dispositif de commande d'émulateur acoustique (27) sont programmés pour fournir un fonctionnement synchrone du premier générateur de force circulaire et de l'émulateur acoustique et comprenant en outre l'étape consistant à sélectionner soit le dispositif de commande de générateur de force, soit le dispositif de commande d'émulateur acoustique en tant que dispositif de commande principal et à utiliser le dispositif de commande principal pour gérer des signaux de données de telle sorte que le moment où le premier signal de demande ou le signal de demande supplémentaire du dispositif de commande de générateur de force au premier générateur de force circulaire arrivera au niveau du premier générateur de force circulaire coïncide avec l'instant où le premier signal de demande ou le signal de demande supplémentaire du dispositif de commande d'émulateur acoustique arrive au niveau dudit émulateur acoustique, produisant ainsi un signal audio et une vibration suffisants pour émuler le son d'un moteur à combustion interne et les vibrations d'un moteur à combustion interne pour émuler le fonctionnement d'un moteur à combustion interne et une sensation de fonctionnement d'un véhicule commandé par un moteur à combustion interne à l'intérieur de l'habitacle pour passagers.

12. Le procédé de la revendication 9, où ledit signal de demande commande ledit premier générateur de force circulaire et amène ledit premier générateur de force circulaire à produire des vibrations qui émulent un moteur à combustion interne subissant une augmentation en tours par minute.

13. Le procédé de la revendication 9, où ledit signal de demande commande ledit premier générateur de force circulaire et amène ledit premier générateur de force circulaire à produire des vibrations qui émulent un moteur à combustion interne subissant une diminution en tours par minute.

14. Le procédé de la revendication 9, où ledit signal de demande supplémentaire commande ledit premier générateur de force circulaire et, dans le mode passage de vitesse, amène ledit premier générateur de force circulaire à produire des vibrations qui émulent un changement de vitesses d'un véhicule entraîné par un moteur à combustion interne et une boîte de vitesses automatique.
